(19) **Europäisches Patentamt**
**European Patent Office**
**Office européen des brevets**

(11) **EP 3 288 200 B1**

(12) **EUROPEAN PATENT SPECIFICATION**

(45) Date of publication and mention
of the grant of the patent:
**06.03.2019 Bulletin 2019/10**

(51) Int Cl.:
***H04J 3/06*** *(2006.01)*

(21) Application number: **16185293.4**

(22) Date of filing: **23.08.2016**

(54) **METHOD OF SYNCHRONIZING MASTER AND SLAVE CLOCKS IN A COMPUTER NETWORK, CORRESPONDING SYSTEM**

VERFAHREN ZUR SYNCHRONISIERUNG VON HAUPT- UND NEBENUHREN IN EINEM COMPUTERNETZWERK, ENTSPRECHENDES SYSTEM

PROCÉDÉ DE SYNCHRONISATION D'HORLOGES MAÎTRE ET ESCLAVE DANS UN RÉSEAU INFORMATIQUE, SYSTÈME CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.02.2018 Bulletin 2018/09**

(73) Proprietor: **ROBERT BOSCH GMBH**
**70442 Stuttgart (DE)**

(72) Inventor: **DIARRA, Aboubacar**
**70469 Stuttgart-Feuerbach (DE)**

(56) References cited:
**EP-A1- 2 863 576     WO-A1-2008/053277**

- **"Precision time protocol telecom profile for frequency synchronization; G.8265.1/Y.1365.1 (07/14)", ITU-T STANDARD, INTERNATIONAL TELECOMMUNICATION UNION, GENEVA ; CH, no. G.8265.1/Y.1365.1 (07/14), 22 July 2014 (2014-07-22), pages 1-32, XP044008713, [retrieved on 2014-10-21]**

**Description**

Background

One challenge in designing a time sensitive system for a computer network is common time base establishment.

The invention relates to a method of synchronizing master and slave clocks in such computer network.

In such computer networks communicated devices have different views of the time, because they have generally different clock characteristics, such as frequency drift, granularity etc., with different initial times.

The resulting clock deviations are intolerable in some industrial and automotive time and safety critical applications.

Application EP 2 863 576 discloses a clock synchronization system where a slave node receives time information from a plurality of master nodes, computes a propagation delay with each master node and regenerate a time of each master node.

Disclosure of the invention

Therefore, it is a goal of the present invention, to provide a mechanism for reliable and robust synchronization of master and slave clocks according to different time scales.

This goal is achieved by the method according to claim 1.

Accordingly, master and slave clocks are synchronized in a computer network by receiving, by a local network node, information about a first remote time of a first master clock,
receiving, by the local network node, information about a second remote time of a second master clock, wherein
a first slave clock of the local network node is synchronized to the first master clock, and
a second slave clock of the local network node is synchronized to the second master clock, wherein
a first time for the first slave clock is determined depending on a current time of the first slave clock, information about the first remote time, information about a first delay characterizing a first transmission time for transmitting the first remote time to the local network node, and a first compensation for a first frequency drift between the first master clock and the first slave clock,
a second time for a second slave clock is determined depending on the current time of the first slave clock, information about the second remote time, information about a second delay characterizing a second transmission time for transmitting the second remote time to the local network node and a second compensation for a second frequency drift between the second master clock and the first slave clock. This way a working time or relative time used locally in the local network node for internal operation, in particular of an electronic control unit, and a universal or absolute time in particular a date and the related time are reliably and robustly synchronized between master and slave.

Advantageously, information about the time of sending of a respective synchronization message is received as information about the corresponding remote time. This way messages according to the well-known IEEE Ethernet 2.1 AS-2011 or -2013 standard are used for the exchange of synchronization information.

Advantageously, the first and/or second compensation is determined depending on information indicating the time difference between the receipt of two synchronization messages for the first and/or second slave clock respectively at the local network node, wherein the first and/or second compensation is determined depending on information indicating the time difference between the sending of the two synchronization messages for the first and/or second slave clock at a remote network node, and wherein the compensation is determined as ratio of the time differences for sending and receiving of the corresponding synchronization messages. Accordingly, a neighbor rate ratio in the relative time base and/or a neighbor rate ratio in the absolute time base are established. The neighbor rate ratio is computed to compensate the frequency drift between the corresponding master and slave clocks. Preferably, the two messages used to calculate the time difference have the same size. Two consecutive synchronization messages or delay request messages may be used for that purpose. Preferably, two synchronization messages, Sync, according to the IEEE 802.1 AS - 2011 or - 2013 protocol are used. These are transmitted more frequently and synchronization can be done quickly this way on start-up of the computer network.

Preferably, the information about the first and/or second delay is determined depending on the first and/or second compensation respectively. This way frequency drift is considered also when determining the respective delay. This improves the accuracy of the synchronization further.

Preferably the first delay is determined as ratio of the respective time differences and/or that the second delay is determined as ratio of the respective time differences. This provides an advantageous implementation.

Preferably, the information of the first master clock and the second master clock is received from the same remote network node. This way a single network node provides the time base for both slave clocks. This reduces the network complexity.

Preferably, the first synchronization message and the time of sending the first synchronization message are received in a single message at the local network node and/or the second synchronization message and the time of sending the second synchronization message are received as a single message at the local network node. This reduces the traffic on the computer network in particular at the start-up of the computer network. This way the synchronization is fast.

Preferably, the first synchronization message and the time of sending the first synchronization message are received in separate messages and/or the second synchronization message and the time of sending the second synchronization message are received in separate messages at the local network node. This way, the synchronization message is sent without the time of sending. This reduces the load on the corresponding port for sending the synchronization message because it allows sending the time of sending the synchronization message in a second message after the synchronization message itself.

Preferably the first time and the second time are synchronized iteratively in predetermined common synchronization intervals. This provides a simple mechanism for synchronizing the slave clocks to the master clocks.

Preferably the first time and the second time are synchronized iteratively in different predetermined time intervals. This provides a flexible mechanism that is adjustable to the requirements of the different time bases.

Preferably the first time and the second time are synchronized iteratively in different predetermined intervals using separate messages, wherein the first time and the second time are synchronized iteratively in a predetermined common synchronization interval using a common message if the different intervals overlap at least partially. This reduces the load on the network for the cases where the synchronization can be performed in the same interval using the same common message.

Advantageously, a request for receiving information about the data link delay time is sent, a response to the request including information about a time of receipt is received, and the first delay is determined depending on information about the difference between a time of sending of the request and a time of receipt of a synchronization message, and information about the difference between the time of receipt of the request and a time of sending of the synchronization message. This way the P_delay messages according to the precision time protocol, in particular according to IEEE 1588 - 2008, may be used with the synchronization messages, Sync, according to the same protocol for implementing the synchronization mechanism in a robust way.

Preferably a first synchronization message is sent for synchronizing to the first remote time, a second synchronization message is sent for synchronizing to the second remote time or a third synchronization message for synchronizing to the first remote time and to the second remote time is sent if a respective predetermined condition based on the first remote time is met. This way different synchronization messages are transmitted depending on different states of the computer network. This provides flexible use of the resources of the computer network depending on the relative position of the synchronization intervals for the different remote time basis.

Preferably the information about the time is a respective timestamp of sending or receiving a corresponding message. Using timestamps, in particular according to the precision time protocol mentioned before or the definition of IEEE 802.1 AS mentioned before, simplifies the synchronization mechanism.

The invention also concerns a system for synchronizing master and slave clocks in a computer network and a corresponding computer program product.

Further developments of the invention are described below and referencing the drawings in which

Figure 1     depicts schematically part of a computer network,

Figure 2     schematically a sequence diagram showing sequence for clock synchronization for relative time,

Figure 3     schematically another sequence diagram showing messages for clock synchronization for relative time,

Figure 4     schematically a sequence diagram showing messages for clock synchronization for absolute time,

Figure 5     schematically another sequence diagram showing messages for clock synchronization for absolute time,

Figure 6     schematically a sequence diagram showing messages for clock synchronization for both absolute and relative times,

Figure 7     schematically another sequence diagram showing messages for clock synchronization for both absolute and relative times,

Figure 8     schematically synchronization intervals over time,

Figure 9     schematically a synchronization message transmission state machine.

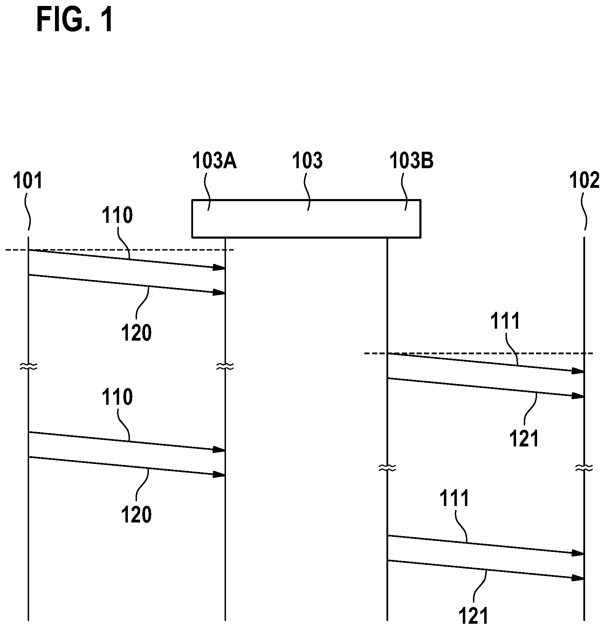

Figure 1 schematically depicts a part of a computer network having a remote network node 101 and a local network node 102. The remote network node 101 is an electronic control unit configured as grandmaster according to the IEEE 802.1 AS - 2011 or - 2013 and the precision time protocol, IEEE 1588 - 2008 standard. The local network node 102 is an electronic control unit configured as a corresponding slave device according to the same protocols.

According to the example a bridge 103 is in between the remote network node 101 and the local network node 102. In particular, the bridge 103 connects to the remote network node 101 via a slave port 103A and to the local network node 102 via a master port 103B. Accordingly, bridge 103 is configured to forward any time synchronization messages received from the remote network node 101 to the local network node 102 according to the afore-mentioned protocols.

In the example, the remote network node 101 is configured to sent synchronization messages 110 iteratively, for example every 125 milliseconds after the start of the computer network.

Additionally, the remote network node 101 is configured to sent the time of sending the synchronization message 110 as well. In the example, the time of sending the synchronization message 110 is determined by generating a corresponding timestamp at the remote network node 101. The timestamp may be sent in the synchronization message 110, or as depicted in the figure 1 in an optional separate follow-up message 120.

Upon receipt of the synchronization message 110 and/or the follow-up message 120 at the slave port 102A, the bridge 103 processes the received message and forwards it as synchronization message 111 and if applicable as follow-up message 121. These messages are sent via the master port 103B. These messages are also sent according to the afore-mentioned protocol.

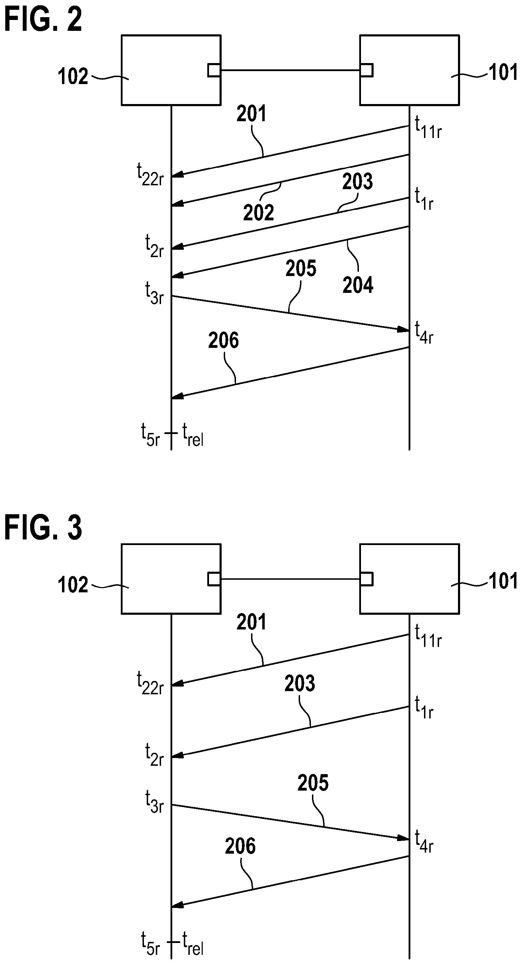

In examples depicted in figures 2 to 7, the local network node 102 and the remote network node 101 are directly connected to each other. Likewise the connection may be via one or more bridges that are configured as time aware systems.

Time aware system, according to the afore-mentioned protocols, means that a peer delay mechanism according to the afore-mentioned protocols is used in which the remote network node 101 is configured as grandmaster and sends "Sync" and/or "Follow-up" messages to all of its ports connected to time aware systems. Accordingly, the transmission frequency is for example 8 Hz, that means every 125 milliseconds. The time at which the "Sync" message has been transmitted is either put into the "Sync" message or saved by the grandmaster and put in a "Follow-up" message.

In the transmission between different network nodes a delay characterizing the transmission time for transmitting the "Sync" or "Follow-up" message is applicable between the network nodes. Furthermore, processing time in a network node results in further time difference between the time of sending and the time of receiving of the corresponding messages. During this delay additionally a frequency drift between the master clock and the slave clock of the receiving network node may occur as well.

To set the slave clock appropriately to the same time as the master time, the current time of the slave clock is corrected considering these effects.

To this end, preferably, the "Sync" message or the "Follow-up" message contains the transmission time of the "Sync" message according to the grandmaster clock. Using this transmission time and further information regarding the delay, processing time and frequency drift, the current time for the slave clock is calculated.

The synchronization mechanism for the example of two grandmaster clocks and two respective slave clocks is described below referencing figures 2 to 7.

Figure 2 depicts schematically a sequence diagram for clock synchronization for relative time. Relative time in this context means the working time of the slave node 102 that is synchronized to the working time of the remote network node 101 operating as grandmaster.

As depicted in figure 2 at a first time $t_{11r}$ a message 201, Sync, is sent from the remote network node 101 to the local network node 102. The local network node 102 receives the message 201 at a time $t_{22r}$.

A time stamp indicating the time $t_{11r}$ is saved by the remote network node 101 and forwarded in a message 202 follow-up to the local network 202.

At a time $t_{1r}$, for example after 125 milliseconds, after the time $t_{11r}$, a message 203, Sync, is sent from the remote network node 101 to the local network node 102. The local network node 102 receives the message 203, Sync, at a time $t_{2r}$.

Afterwards, a message 204, Follow-up, is sent from the remote network 101 to the local network node 102. The remote network node 101 saves a time stamp indicating the time $t_{1r}$ and sends it in the message 204, Follow-up, for that purpose.

Afterwards at a time $t_{3r}$ a message 205 is sent from the local network node 102 to the remote network node 101. The remote network node 101 receives the message 205 at a time $t_{4r}$. The message 205 is in the example a message Pdelay_Req according to the afore-mentioned protocols. Upon receipt of the message 205, in particular the message Pdelay_Req, the remote network node 101 sends a corresponding response in a message 206, Pdelay_Resp. The message 206 contains the timestamp indicating the time of receipt of the message 205.

Upon receipt of a message 206, at the local network 102, a time $t_{5r}$ indicated by the slave clock of the local network node 102 is corrected to determine the synchronized time $t_{rel}$ at the local network node 102.

The calculation of the synchronized time $t_{rel}$ is explained below.

Figure 3 depicts another sequence diagram including messages for clock synchronization for relative time. The reference signs indicating similar messages as the messages that were sent in the example according to figure 2 are labeled with the same reference signs.

According to the example of figure 3, the message 201, Sync, includes the time stamp indicating the time $t_{11r}$. Consequently, no Follow-up message is required.

Likewise the message 203, Sync already contains the time stamp indicating the time $t_{1r}$. Therefore, no further Follow-up message is required.

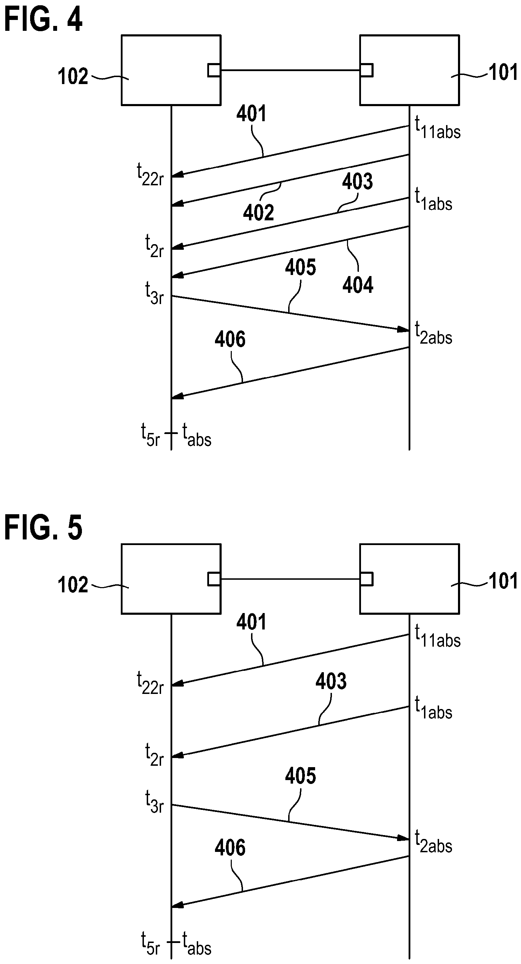

Corresponding clock synchronization for absolute time is explained below referencing figures 4 and 5 for examples using Follow-up messages and without Follow-up messages respectively.

At a time $t_{11abs}$ the remote network node 101 sends a message 401 Sync to the local network node 102. The local node 102 receives the message 401 at a time $t_{22r}$. According to the protocols referenced above, a corresponding Follow-up message including the time stamp for the time $t_{11abs}$ is sent in a message 402 from the remote network node 101 to the local network node 102.

At a time $t_{1abs}$, for example, 30 milliseconds after $t_{11abs}$, a message 403 Sync is sent from the remote network node 101 to the local network node 102. The local network node 102 receives the message 403 at a time $t_{2r}$. The corresponding Follow-up message including the time stamp for the time $t_{1abs}$ is sent in a message 404 from the remote network node 101 to the local network node 102 afterwards.

Afterwards at a time $t_{3r}$ the local network node 102 sends a message 405 to the remote network node 101. The message 405 is afore-mentioned request for the delay, in this case in absolute time. Upon receipt of the message 405 the remote network node 101 sends the corresponding response in a message 406 to the local network node 102.

Upon receipt of the message 406 the local network node 102 determines the current time $t_{5r}$ and the absolute time for the slave clock on the local network node 102 as described below.

According to the example of figure 5 the same reference signs are used for similar messages as in the example of figure 4. Accordingly, the message 401, Sync, is modified to include the timestamp indicating the time $t_{11abs}$. The message 403, Sync, is modified to include the timestamp indicating the time $t_{1abs}$. According, the respective Follow-up messages are not used in the example according to figure 5.

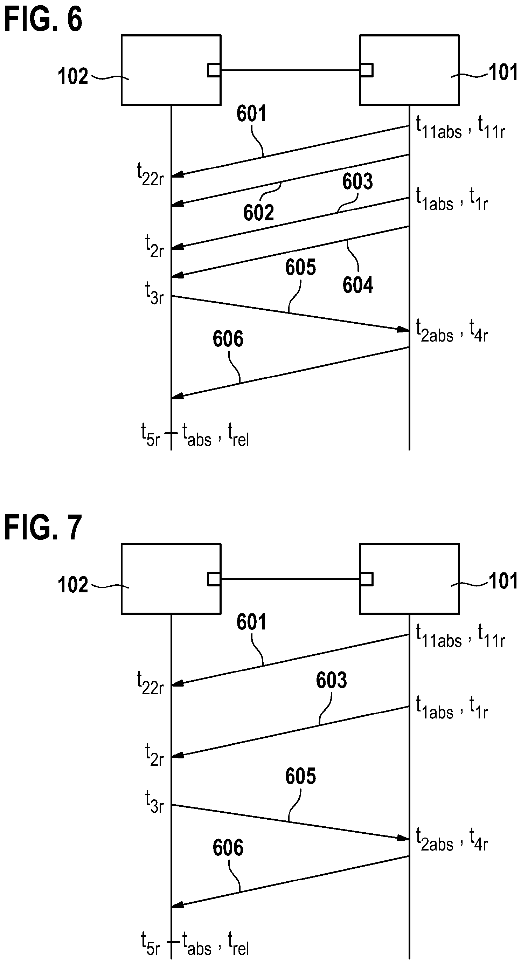

Figure 6 and figure 7 schematically depict sequence diagrams for a combination of the mechanisms described referencing figures 2 to 5. Accordingly, the remote network node 101 sends a message 601 at a time $t_{11abs}$ that is the same as the time $t_{11r}$. In this example $t_{11abs}$ and $t_{11r}$ indicate absolute and relative times at the respective grandmaster clock at the time of sending of the message 601 respectively.

The message 601 is received at the local network node 102 at time $t_{22r}$. The corresponding Follow-up message is sent as a message 602 containing the timestamps indicating the time $t_{11abs}$ and $t_{11r}$ respectively.

The remote network node 101 sends a message 603, Sync, at a time $t_{1abs}$ that is the same as time $t_{1r}$. Accordingly, the time $t_{1abs}$ and $t_{1r}$ indicate the absolute and relative times at the respective grandmaster clock at the time of sending of the message 603.

The message 603 is received at the local network node 102 at time $t_{2r}$.

Afterwards, the corresponding Follow-up message 604 is sent as a message 604 including the time stamps of indicating the time $t_{1abs}$ and $t_{1r}$ respectively.

Afterwards at time $t_{3r}$ a message 605 is sent from the local network node 102 to the remote network node 101. In the message 605 a request for the delay of both the absolute and relative times is send. The request is received at the remote network node 101 at a time $t_{2abs}$, that corresponds to a time $t_{4r}$. The times $t_{2abs}$ and $t_{4r}$ indicate the absolute and relative times at the grandmaster clock at the time of receipt of the message 605 respectively. Corresponding time stamps are saved by the remote network node 101 and sent to the local network node 102 in a corresponding response message 606. Upon receipt of the message 606 the local network node 102 determines the time for setting the respective slave clocks as described below.

In the example according to figure 7 the message 601, Sync and the message 603, Sync, are modified from the messages used in the example according to figure 6 by including the timestamps of the respective times of sending the respective Sync messages. Otherwise the messages are the same as in the example according to figure 6. However, no Follow-up messages are used.

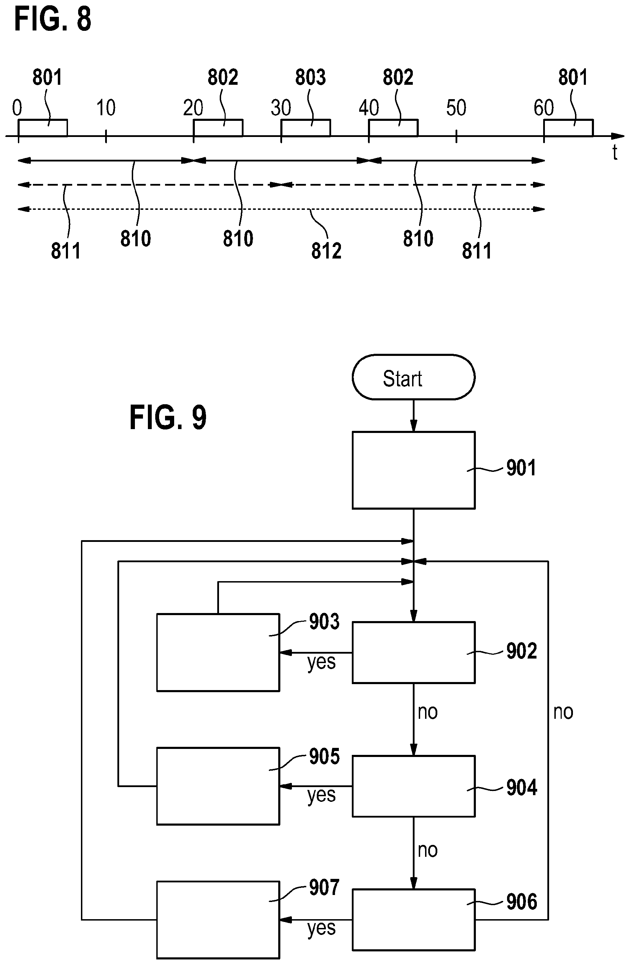

Figure 8 depicts schematically intervals for synchronizing according to the aforedescribed examples. Preferably, a first synchronizing interval 801 starts at a time t equal to 0. The first synchronizing interval has a predetermined length of for example 7 milliseconds. During the first synchronizing interval 801 the clock synchronization for both absolute and relative times is performed for example according to one of the methods described referencing figures 6 and figures 7. After a first synchronization period 810 a second synchronization interval 802 starts for clock synchronization for relative time according to one of the methods described referencing figures 2 and 3. The second synchronization interval 802 has a predetermined length of for example 5 milliseconds. Afterwards at a second time period 811, a third synchronization interval 803 for synchronizing for absolute time starts. The third synchronized interval 803 has a third predetermined length of for example 5 milliseconds. During the third synchronization interval 803 clock synchronization for absolute time is performed according to one of the methods described referencing figure 4 or 5.

The second synchronization interval 802 starts for example 20 milliseconds after the first synchronization interval 801 started. The third synchronization interval 803 starts for example 30 milliseconds after the first synchronization interval 801 started. This means that the first synchronization period is 20 milliseconds and the second synchronization period is 30 milliseconds. Accordingly, the first synchronization interval 801 is repeated every 60 milliseconds. In the example this correspond to the third synchronization period 812. Likewise the second synchronization interval 802 and the third synchronization interval 803 are repeated in between the first synchronization intervals 801.

Figure 9 describes schematically a synchronization message transmission state machine for implementing the corresponding synchronization mechanism.

According to the synchronization message transmission state machine of figure 9, after the start a step 901 is executed.

In the step 901 a timer is started to trigger the synchronization, e.g. as described referring figure 8. A common synchronization message $Sync_{relabs}$ is sent, e.g. as described for message 601. For example, a corresponding frame according to the afore-mentioned precision time protocol is send. Afterwards a step 902 is executed.

In step 902 a test is performed, to determine if the timer that started at the time the common synchronization message was sent in step 901 indicates that the synchronization period 810 for the synchronization in relative time has ended, while the synchronization period 811 for the synchronization in absolute time has not ended yet. For example, in the test it is determined that the time is a multiple of the duration of the synchronization period 810 but not a multiple of the synchronization period 811.

In case this condition is met, a step 903 is executed. Otherwise a step 904 is executed.

In step 903 a synchronization message, e.g. as described for message 201, for synchronization in relative time is send. For example, a corresponding frame according to the precision time protocol mentioned above is sent in step 903.

Afterwards the step 902 is repeated.

In step 904 a test is performed to determine if the synchronization period 811 ended while the synchronization period 810 has not ended yet. For example in the test it is determined that the time is not a multiple of the synchronization period 810, while it is a multiple of the synchronization period 811.

If the condition is met a step 905 is executed, otherwise a step 906 is executed.

In step 905 a synchronization message, e.g. as described for message 401, for synchronizing in absolute time is sent. For example, a corresponding synchronizing frame according to the afore-mentioned precision time protocol is sent. Afterwards the step 902 is repeated.

In step 906 a test is performed to determine if the synchronization period 812 ended. For example, in the test it is determined that the time is a multiple of the synchronization period 810 and of the synchronization period 811.

If the condition is met a step 907 is executed. Otherwise step 902 is repeated.

In step 907 a common synchronization message, e.g. as described for message 601, for absolute and relative times is sent. For example, a corresponding synchronizing frame according to the precision time protocol is send. Afterwards the step 902 is repeated.

Sending a synchronization message in this context means that a corresponding timestamp is generated and added to the synchronization message before sending it. Alternatively, the timestamp may be sent in a corresponding Follow-up message instead according to the afore-mentioned precision time protocol.

The remote network node 101, the local network node 102 and if applicable the bridge 103 are adapted to process the corresponding frames. To identify the different types of frames, that means to distinguish common synchronization messages from synchronization messages from absolute or relative times, corresponding tags may be added to the synchronization message, or if applicable, the Follow-up message.

In the example the remote network node 101 holds the time reference for both time scales. Accordingly, no best master clock algorithm is required in this use case. Additionally or alternatively the best master clock algorithm may be used in case that one remote network node 101 fails.

As mentioned above, the relative and absolute times are carried with different synchronization intervals. The synchronization messages have tags specifying if they are carrying absolute time, relative time or both. Likewise the Follow-up or Path delay request and Path delay response messages are distinguishable by corresponding tags. This way the local network node 102 receiving the messages inspects the received frames and processes the content to synchronize the slave clock to the corresponding master clock. To that purpose the following equations may be used.

Neighbor rate ratios $r_{rel}$ and $r_{abs}$ are computed from two Sync messages that preferably are successive Sync messages. $r_{abs}$ is the neighbor rate ratio in absolute time and $r_{rel}$ is the neighbor rate ratio in relative time. After having received preferably two consecutive synchronization messages, and if applicable the corresponding Follow-up message, the local network node 102 computes the current absolute and current relative time as follows:

$$t_{rel} = t_{1r} + T_{link\_rel} + ( t_{5r} - t_{2r})*r_{rel} \, , \quad t_{abs} = t_{1abs} + T_{link\_abs} + ( t_{5r} - t_{2r})*r_{abs}$$

$$T_{link\_rel} = ( t_{4r} - t_{1r}) - ( t_{3r} - t_{2r})* r_{rel} /2 \, , \quad T_{link\_abs} = ( t_{2abs} - t_{1abs}) - ( t_{3r} - t_{2r})* r_{abs} /2$$

$$r_{rel} = ( t_{1r} - t_{11r})/( t_{2r} - t_{22r}) \, , \quad r_{abs} = ( t_{1abs} - t_{11abs}) /( t_{2r} - t_{22r})$$

The delay for the transmission in this example is $T_{link\_rel}$ for relative time and $T_{link\_abs}$ for absolute time.

Preferably the remote network node and the local network node are electronic control units connected by Ethernet according to IEEE 802.3 - 2012. However, other electronic control units, gateways or other units running IEEE 802.1 time synchronization protocol for common time base establishment can be modified accordingly.

In any case at the remote network node 101 a first master clock provides a first remote time and a second master clock provides a second remote time. Accordingly, a first slave clock of the local network node 102 is synchronized to the first master clock and the second slave clock of the local network node 102 is synchronized to the second master clock. However, more than two clocks may be used as master or slave clocks and synchronized accordingly. Likewise the master clocks may be on different remote networks nodes.

As described above the first time $t_{rel}$ for the first slave clock is determined depending on the current time $t_{5r}$ of the first slave clock, information about the first remote time $t_1$, information about the first delay $T_{link\_rel}$ and the first compensation $r_{rel}$ according to the equations given above. Likewise the second time $t_{abs}$ for the second slave clock is determined depending on the current time $t_{5r}$ of the first slave clock, information about the second remote time $t_{1abs}$, information about a second delay $T_{link\_abs}$, and the second compensation $r_{abs}$ according to the equations described above.

Preferably, the remote network node 101 is directly connected to the local network node 102. However, if applicable one or more bridges 103 may be placed between them. In this case the bridge forwards the synchronization messages or if applicable Follow-up messages with a sum of the corresponding delay and including if applicable resident time in the bridge and a cumulative rate ratio indicating the frequency drift between the different clocks of the time aware system transmitting the messages, for example by cumulating the corresponding neighbor rate ratios.

In this case the local network node 102 corrects its clock using this information in the equations given above.

## Claims

1. Method of synchronizing master and slave clocks in a computer network, comprising receiving, by a local network node (102), information about a first remote time ($t_{1r}$) of a first master clock,
   receiving, by the local network node (102), information about a second remote time ($t_{1abs}$) of a second master clock, wherein
   a first slave clock of the local network node (102) is synchronized to the first master clock, and
   a second slave clock of the local network node (102) is synchronized to the second master clock, wherein
   a first time (trel) for the first slave clock is determined depending on a current time (t5r) of the first slave clock, information about the first remote time ($t_{1r}$), information about a first delay, $T_{link\_rel}$, characterizing a first transmission time for transmitting the first remote time ($t_{1r}$) to the local network node (102), and a first compensation, $r_{rel}$, for a first frequency drift between the first master clock and the first slave clock,
   a second time ($t_{abs}$) for the second slave clock is determined depending on the current time ($t_{5r}$) of the first slave clock, information about the second remote time ($t_{1abs}$), information about a second delay, $T_{link\_abs}$, characterizing a second transmission time for transmitting the second remote time ($t_{1abs}$) to the local network node (102), and a second compensation, $r_{abs}$, for a second frequency drift between the second master clock and the first slave clock.

2. Method according to claim 1, comprising receiving by the local network node (102), information about the time of sending of a respective synchronization message (203; 403; 603) as information about the corresponding remote time ($t_{1r}$, $t_{1abs}$).

3. The method of any of the preceding claims, comprising that the first and/or second compensation, $r_{rel}$, $r_{abs}$, is determined depending on information indicating the time difference between the receipt ($t_{2r}$, $t_{22r}$) of two synchronization messages (401, 403; 601, 603) for the first and/or second slave clock respectively at the local network node (102), wherein the first and/or second compensation, $r_{rel}$, $r_{abs}$, is determined depending on information indicating the time difference between the sending ($t_{1r}$, $t_{11r}$; $t_{1abs}$, $t_{11abs}$) of the two synchronization messages (401, 403; 601, 603) for the first and/or second slave clock at a remote network node (101), and wherein the compensation, $r_{rel}$, $r_{abs}$, is determined as ratio of the time differences for sending and receiveing of the corresponding synchronization messages (401, 403; 601, 603).

4.  The method of any of the preceding claims, comprising that the information about the first and/or second delay, $T_{link\_rel}$, $T_{link\_abs}$, is determined depending on the first and/or second compensation, $r_{rel}$, $r_{abs}$, respectively.

5.  The method of any of the preceding claims, comprising that the information of the first master clock and the second master clock is received from the same remote network node (101).

6.  The method of any of the preceding claims, comprising that the times of sending ($t_{1r}$, $t_{11r}$, $t_{1abs}$, $t_{11abs}$) indicate a time of sending of the respective synchronization message by a remote network node (101) connected directly to the local network node (102).

7.  The method of any of the preceding claims, comprising that the first synchronization message (203; 403; 603) and the time ($t_{1r}$, $t_{1abs}$) of sending the first synchronization message (203; 403; 603) are received in a single message at the local network node (102), and/or the second synchronization message (401, 601) and the time ($t_{11r}$; $t_{11abs}$) of sending the second synchronization message (401, 601) are received as a single message at the

8.  The method of any of claims 1 to 6, comprising that the first synchronization message (203; 403; 603) and the time ($t_{1r}$; $t_{1abs}$) of sending the first synchronization message (203; 403; 603) are received in separate messages (204; 404; 604), and/or the second synchronization message (201; 401; 601) and the time ($t_{11r}$; $t_{11abs}$) of sending the second synchronization message (201; 401; 601) are received in separate messages (202; 402; 602) at the local network node (102).

9.  The method of any of the preceding claims, comprising that the first time ($t_{rel}$) and the second time ($t_{abs}$) are synchronized iteratively in predetermined common synchronization intervals.

10. The method of any of the claims 1 to 8, comprising that the first time ($t_{rel}$) and the second time ($t_{abs}$) are synchronized iteratively in different predetermined intervals.

11. The method of any of claims 1 to 8, comprising that that the first time ($t_{rel}$) and the second time ($t_{abs}$) are synchronized iteratively in different predetermined intervals using separate messages (903, 905), wherein the first time ($t_{rel}$) and the second time ($t_{abs}$) are synchronized iteratively in a predetermined common synchronization intervals using a common message (906) if the different intervals overlap at least partially.

12. The method of any of the preceding claims, comprising sending by the local network node to a remote network node a request (205, 405, 605) for receiving information about a data link delay time, receiving a response (206, 406, 606) to the request (205, 405, 605) including information about a time of receipt ($t_{4r}$, $t_{2abs}$) of the request (205, 405, 605), and in that the first delay, $T_{link\_rel}$, and/or the second delay, $T_{link\_abs}$, is determined depending on information about the difference between a time of sending ($t_{3r}$) of the request (205, 405, 605) and a time of receipt ($t_{2r}$) of a synchronization message (203, 403, 603), and information about the difference between the time of receipt ($t_{4r}$, $t_{2abs}$) of the request (205, 405, 605) and a time of sending ($t_{1r}$) of the synchronization message (203, 403, 603) wherein the first delay, $T_{link\_rel}$, is determined as ratio of the respective time differences and/or that the second delay, $T_{link\_abs}$, is determined as ratio of the respective time differences.

13. The method of any of the preceding claims, comprising sending (903; 905; 906) by a remote network node, a first synchronization message (203) for synchronizing to the first remote time ($t_{1r}$), a second synchronization message (403) for synchronizing to the second remote time ($t_{1abs}$) or a third synchronization message (603) for synchronizing to the first time ($t_{1rel}$) and to the second time ($t_{1abs}$), if a respective predetermined condition (902, 904, 906) based on the first remote time ($t_{1r}$) is met.

14. The method of any of the preceding claims, comprising that the information about the first and second remote time is a respective timestamp of sending or receiving a corresponding message.

15. A system for synchronizing master and slave clocks in a computer network, **characterized by** a remote network node (101) and a local network node (102) configured to perform the steps of the method according to any of the preceding claims.

**16.** A computer program product, for synchronizing master and slave clocks in a computer network, **characterized in that** the computer program product contains instructions, that, when executed on a computer, perform the method according to any of the claims 1 to 14.

**Patentansprüche**

**1.** Verfahren zum Synchronisieren von Master- und Slave-Taktgebern in einem Computernetzwerk umfassend:

Empfangen in einem lokalen Netzwerkknoten (102) von Informationen über einen ersten fernen Zeitpunkt ($t_{1r}$) eines ersten Master-Taktgebers,

Empfangen in dem lokalen Netzwerkknoten (102) von Informationen über einen zweiten fernen Zeitpunkt ($t_{1abs}$) eines zweiten Master-Taktgebers, wobei ein erster Slave-Taktgeber des lokalen Netzwerkknotens (102) auf den ersten Master-Taktgeber synchronisiert wird, und

wobei ein zweiter Slave-Taktgeber des lokalen Netzwerkknotens (102) auf den zweiten Master-Taktgeber synchronisiert wird, und wobei ein erster Zeitpunkt ($t_{rel}$) für den ersten Slave-Taktgeber in Abhängigkeit von einem aktuellen Zeitpunkt ($t_{5r}$) des ersten Slave-Taktgebers, von Informationen über den ersten fernen Zeitpunkt ($t_{1r}$), von Informationen über eine erste Verzögerung, $T_{link\_rel}$, die einen ersten Übertragungszeitpunkt zum Übertragen des ersten fernen Zeitpunkts ($t_{1r}$) an den lokalen Netzwerkknoten (102) charakterisiert, und von einer ersten Kompensation, $r_{rel}$, für eine erste Frequenzdrift zwischen dem ersten Master-Taktgeber und dem ersten Slave-Taktgeber ermittelt wird,

ein zweiter Zeitpunkt ($t_{abs}$) für den zweiten Slave-Taktgeber in Abhängigkeit von dem aktuellen Zeitpunkt ($t_{5r}$) des ersten Slave-Taktgebers, von Informationen über den zweiten fernen Zeitpunkt ($t_{1abs}$), von Informationen über eine zweite Verzögerung, $T_{link\_abs}$, die einen zweiten Übertragungszeitpunkt zum Übertragen des zweiten fernen Zeitpunkts ($t_{1abs}$) an den lokalen Netzwerkknoten (102) charakterisiert, und von einer zweiten Kompensation, $r_{abs}$, für eine zweite Frequenzdrift zwischen dem zweiten Master-Taktgeber und dem ersten Slave-Taktgeber ermittelt wird.

**2.** Verfahren nach Anspruch 1, umfassend:
Empfangen in dem lokalen Netzwerkknoten (102) von Informationen über den Sendezeitpunkt einer jeweiligen Synchronisationsnachricht (203; 403; 603) als Information über den entsprechenden fernen Zeitpunkt ($t_{1r}$, $t_{1abs}$).

**3.** Verfahren nach einem der vorhergehenden Ansprüche, das umfasst, dass die erste und die zweite Kompensation $r_{rel}$, $r_{abs}$ in Abhängigkeit von Informationen ermittelt werden, welche jeweils die Zeitdifferenz zwischen dem Empfang ($t_{2r}$, $t_{22r}$) der zwei Synchronisationsnachrichten (401, 403; 601, 603) für den jeweiligen ersten und/oder den zweiten Slave-Taktgeber in dem lokalen Netzwerkknoten (102) anzeigen, wobei die erste und/oder die zweite Kompensation $r_{rel}$, $r_{abs}$ in Abhängigkeit von Informationen ermittelt werden, welche die Zeitdifferenz zwischen dem Senden ($t_{1r}$, $t_{11r}$; $t_{1abs}$, $t_{11abs}$) der zwei Synchronisationsnachrichten (401, 403; 601, 603) für den ersten und/oder den zweiten Slave-Taktgeber in einem fernen Netzwerkknoten (101) anzeigen, und wobei die Kompensation $r_{rel}$, $r_{abs}$ als Verhältnis der Zeitdifferenzen für das Senden und Empfangen der entsprechenden Synchronisationsnachrichten (401, 403; 601, 603) ermittelt wird.

**4.** Verfahren nach einem der vorhergehenden Ansprüche, das umfasst, dass die Informationen über die erste und/oder die zweite Verzögerung $T_{link\_rel}$, $T_{link\_abs}$ jeweils in Abhängigkeit von der ersten und/oder der zweiten Kompensation $r_{rel}$, $r_{abs}$ ermittelt werden.

**5.** Verfahren nach einem der vorhergehenden Ansprüche, das umfasst, dass die Informationen des ersten Master-Taktgebers und des zweiten Master-Taktgebers von dem gleichen fernen Netzwerkknoten (101) empfangen werden.

**6.** Verfahren nach einem der vorhergehenden Ansprüche, das umfasst, dass die Sendezeitpunkte ($t_{1r}$, $t_{11r}$, $t_{1abs}$, $t_{11abs}$) einen Sendezeitpunkt der jeweiligen Synchronisationsnachricht durch einen fernen Netzwerkknoten (101) anzeigen, der direkt mit dem lokalen Netzwerkknoten (102) verbunden ist.

**7.** Verfahren nach einem der vorhergehenden Ansprüche, das umfasst, dass die erste Synchronisationsnachricht (203; 403; 603) und der Sendezeitpunkt ($t_{1r}$, $t_{1abs}$) der ersten Synchronisationsnachricht (203; 403; 603) in einer einzigen Nachricht in dem lokalen Netzwerkknoten (102) empfangen werden, und/oder dass die zweite Synchronisationsnachricht (401, 601) und der Sendezeitpunkt ($t_{11r}$; $t_{11abs}$) der zweiten Synchronisationsnachricht (401, 601) in einer einzigen Nachricht in dem lokalen Netzwerkknoten (102) empfangen werden.

**8.** Verfahren nach einem der Ansprüche 1 bis 6, das umfasst, dass die erste Synchronisationsnachricht (203; 403; 603) und der Sendezeitpunkt ($t_{1r}$, $t_{1abs}$) der ersten Synchronisationsnachricht (203; 403; 603) in getrennten Nachrichten (204; 404; 604) empfangen werden, und/oder dass die zweite Synchronisationsnachricht (201; 401, 601) und der Sendezeitpunkt ($t_{11r}$; $t_{11abs}$) der zweiten Synchronisationsnachricht (201; 401, 601) in getrennten Nachrichten (202; 402; 602) in dem lokalen Netzwerkknoten (102) empfangen werden.

**9.** Verfahren nach einem der vorhergehenden Ansprüche, das umfasst, dass der erste Zeitpunkt ($t_{rel}$) und der zweite Zeitpunkt ($t_{abs}$) iterativ in vorbestimmten gemeinsamen Synchronisationsintervallen synchronisiert werden.

**10.** Verfahren nach einem der Ansprüche 1 bis 8, das umfasst, dass der erste Zeitpunkt ($t_{rel}$) und der zweite Zeitpunkt ($t_{abs}$) iterativ in verschiedenen vorbestimmten Intervallen synchronisiert werden.

**11.** Verfahren nach einem der Ansprüche 1 bis 8, das umfasst, dass der erste Zeitpunkt ($t_{rel}$) und der zweite Zeitpunkt ($t_{abs}$) mithilfe getrennter Nachrichten (903, 905) iterativ in verschiedenen vorbestimmten Intervallen synchronisiert werden, wobei der erste Zeitpunkt ($t_{rel}$) und der zweite Zeitpunkt ($t_{abs}$) mithilfe einer gemeinsamen Nachricht (906) iterativ in vorbestimmten gemeinsamen Synchronisationsintervallen synchronisiert werden, wenn sich die verschiedenen Intervalle mindestens teilweise überlappen.

**12.** Verfahren nach einem der vorhergehenden Ansprüche, das ein Senden einer Anfrage (205, 405, 605) zum Empfangen von Informationen über eine Datenlink-Verzögerungszeit von dem lokalen Netzwerkknoten an einen fernen Netzwerkknoten und ein Empfangen einer Antwort (206, 406, 606) auf die Anfrage (205, 405, 605) einschließlich von Informationen über einen Empfangszeitpunkt ($t_{4r}$, $t_{2abs}$) der Anfrage (205, 405, 605) umfasst, und wobei die erste Verzögerung $T_{link\_rel}$ und/oder die zweite Verzögerung $T_{link\_abs}$ in Abhängigkeit von Informationen über die Differenz zwischen einem Sendezeitpunkt ($t_{3r}$) der Anfrage (205, 405, 605) und einem Empfangszeitpunkt ($t_{2r}$) einer Synchronisationsnachricht (203, 403, 603) und von Informationen über die Differenz zwischen dem Empfangszeitpunkt ($t_{4r}$, $t_{2abs}$) der Anfrage (205, 405, 605) und einem Sendezeitpunkt ($t_{1r}$) der Synchronisationsnachricht (203, 403, 603) ermittelt werden, wobei die erste Verzögerung $T_{link\_rel}$ als Verhältnis der jeweiligen Zeitdifferenzen ermittelt wird und/oder die zweite Verzögerung $T_{link\_abs}$ als Verhältnis der jeweiligen Zeitdifferenzen ermittelt wird.

**13.** Verfahren nach einem der vorhergehenden Ansprüche, das ein Senden (903; 905; 906) einer ersten Synchronisationsnachricht (203) zum Synchronisieren auf den ersten fernen Zeitpunkt ($t_{1r}$), einer zweiten Synchronisationsnachricht (403) zum Synchronisieren auf den zweiten fernen Zeitpunkt ($t_{1abs}$) oder eine dritte Synchronisationsnachricht (603) zum Synchronisieren auf den ersten Zeitpunkt ($t_{1rel}$) und auf den zweiten Zeitpunkt ($t_{1abs}$) von einem fernen Netzwerkknoten umfasst, wenn eine jeweilige vorbestimmte Bedingung (902, 904, 906) aufgrund des ersten fernen Zeitpunkts ($t_{1r}$) erfüllt wird.

**14.** Verfahren nach einem der vorhergehenden Ansprüche, das umfasst, dass die Informationen über den ersten und den zweiten fernen Zeitpunkt eine jeweilige Zeitmarke zum Senden oder Empfangen einer entsprechenden Nachricht sind.

**15.** System zum Synchronisieren von Master- und Slave-Taktgebern in einem Computernetzwerk **dadurch gekennzeichnet, dass** ein ferner Netzwerkknoten (101) und ein lokaler Netzwerkknoten (102) konfiguriert sind, um die Schritte des Verfahrens nach einem der vorhergehenden Ansprüche auszuführen.

**16.** Computerprogrammprodukt zum Synchronisieren von Master- und Slave-Taktgebern in einem Computernetzwerk, **dadurch gekennzeichnet, dass** das Computerprogrammprodukt Befehle enthält, die, wenn sie von einem Computer ausgeführt werden, das Verfahren nach einem der Ansprüche 1 bis 14 ausführen.

**Revendications**

**1.** Procédé de synchronisation d'horloges maîtres et esclaves dans un réseau informatique, comprenant la réception, par un noeud de réseau local (102), d'informations sur un premier temps distant ($t_{1r}$) d'une première horloge maître,

la réception, par le noeud de réseau local (102), d'informations sur un second temps distant ($t_{1abs}$) d'une seconde horloge maître, dans lequel
une première horloge esclave du noeud de réseau local (102) est synchronisée sur la première horloge maître, et
une seconde horloge esclave du noeud de réseau local (102) est synchronisée sur la seconde horloge maître, dans lequel

un premier temps ($t_{rel}$) pour la première horloge esclave est déterminé en fonction d'un temps courant ($t_{5r}$) de la première horloge esclave, des informations sur le premier temps distant ($t_{1r}$), d'informations sur un premier retard $T_{link\_rel}$, caractérisant un premier temps de transmission pour la transmission du premier temps distant ($t_{1r}$) au noeud de réseau local (102), et d'une première compensation $r_{rel}$ pour un premier décalage de fréquence entre la première horloge maître et la première horloge esclave,

un second temps ($t_{abs}$) pour la seconde horloge esclave est déterminé en fonction d'un temps courant ($t_{5r}$) de la première horloge esclave, des informations sur le second temps distant ($t_{1abs}$), d'informations sur un second retard $T_{link\_abs}$, caractérisant un second temps de transmission pour la transmission du second temps distant ($t_{1abs}$) au noeud de réseau local (102), et d'une seconde compensation $r_{abs}$ pour un second décalage de fréquence entre la seconde horloge maître et la première horloge esclave.

2. Procédé selon la revendication 1, comprenant la réception, par le noeud de réseau local (102), d'informations sur le temps d'envoi d'un message de synchronisation respectif (203 ; 403 ; 603) en tant qu'informations sur le temps distant correspondant ($t_{1r}$, $t_{1abs}$).

3. Procédé selon l'une quelconque des revendications précédentes, comprenant la détermination de la première et/ou la seconde compensation $r_{rel}$, $r_{abs}$, en fonction d'informations indiquant la différence temporelle entre la réception ($t_{2r}$, $t_{22r}$) de deux messages de synchronisation (401, 403 ; 601, 603) pour la première et/ou la seconde horloge esclave, respectivement, sur le noeud de réseau local (102), dans lequel la première et/ou la seconde compensation $r_{rel}$, $r_{abs}$, est déterminée en fonction d'informations indiquant la différence temporelle entre l'envoi ($t_{1r}$, $t_{11r}$ ; $t_{1abs}$, $t_{11abs}$) des deux messages de synchronisation (401, 403 ; 601, 603) pour la première et/ou la seconde horloge esclave sur un noeud de réseau distant (101), et dans lequel la compensation $r_{rel}$, $r_{abs}$, est déterminée en tant que rapport des différences temporelles pour l'envoi et la réception des messages de synchronisation correspondants (401, 403 ; 601, 603).

4. Procédé selon l'une quelconque des revendications précédentes, comprenant la détermination des informations sur le premier et/ou le second retard $t_{link\_rel}$, $T_{link\_abs}$ en fonction, respectivement, de la première et/ou la seconde compensation $r_{rel}$, $r_{abs}$.

5. Procédé selon l'une quelconque des revendications précédentes, comprenant la réception des informations de la première horloge maître et de la seconde horloge maître depuis le même noeud de réseau distant (101).

6. Procédé selon l'une quelconque des revendications précédentes, comprenant l'indication, par les temps d'envoi ($t_{1r}$, $t_{11r}$ ; $t_{1abs}$, $t_{11abs}$), d'un temps d'envoi du message de synchronisation respectif par un noeud de réseau distant (101) connecté directement au noeud de réseau local (102).

7. Procédé selon l'une quelconque des revendications précédentes, comprenant la réception du premier message de synchronisation (203 ; 403 ; 603) et du temps ($t_{1r}$, $t_{1abs}$) d'envoi du premier message de synchronisation (203 ; 403 ; 603) en un seul message sur le noeud de réseau local (102), et/ou la réception du deuxième message de synchronisation (401, 601) et du temps ($t_{11r}$, $t_{11abs}$) d'envoi du deuxième message de synchronisation (401, 601) en un seul message sur le noeud de réseau local (102).

8. Procédé selon l'une quelconque des revendications 1 à 6, comprenant la réception du premier message de synchronisation (203 ; 403 ; 603) et du temps ($t_{1r}$, $t_{1abs}$) d'envoi du premier message de synchronisation (203 ; 403 ; 603) dans des messages séparés (204 ; 404 ; 604), et/ou la réception du deuxième message de synchronisation (201 ; 401 ; 601) et du temps ($t_{11r}$, $t_{11abs}$) d'envoi du deuxième message de synchronisation (201 ; 401 ; 601) dans des messages séparés (202 ; 402 ; 602) sur le noeud de réseau local (102).

9. Procédé selon l'une quelconque des revendications précédentes, comprenant la synchronisation itérative du premier temps ($t_{rel}$) et du second temps ($t_{abs}$) à des intervalles de synchronisation prédéterminés communs.

10. Procédé selon l'une quelconque des revendications 1 à 8, comprenant la synchronisation itérative du premier temps ($t_{rel}$) et du second temps ($t_{abs}$) à des intervalles de synchronisation prédéterminés différents.

11. Procédé selon l'une quelconque des revendications 1 à 8, comprenant la synchronisation itérative du premier temps ($t_{rel}$) et du second temps ($t_{abs}$) à des intervalles de synchronisation prédéterminés différents au moyen de messages séparés (903, 905), dans lequel le premier temps ($t_{rel}$) et le second temps ($t_{abs}$) sont synchronisés de manière itérative à des intervalles de synchronisation prédéterminés communs au moyen d'un message commun (906) si les intervalles différents se chevauchent au moins en partie.

12. Procédé selon l'une quelconque des revendications précédentes, comprenant l'envoi, par le noeud de réseau local à un noeud de réseau distant, d'une demande (205, 405, 605) de réception d'informations sur un temps de retard de liaison de données, la réception d'une réponse (206, 406, 606) à la demande (205, 405, 605) incluant des informations sur un temps de réception ($t_{4r}$, $t_{2abs}$) de la demande (205, 405, 605), et la détermination du premier retard $T_{link\_rel}$ et/ou du second retard $T_{link\_abs}$ en fonction d'informations sur la différence entre un temps d'envoi ($t_{3r}$) de la demande (205, 405, 605) et un temps de réception ($t_{2r}$) d'un message de synchronisation (203, 403, 603) et d'informations sur la différence entre le temps de réception ($t_{4r}$, $t_{2abs}$) de la demande (205, 405, 605) et un temps d'envoi ($t_{1r}$) du message de synchronisation (203, 403, 603), dans lequel le premier retard $T_{link\_rel}$ est déterminé en tant que rapport des différences temporelles respectives et/ou le second retard $T_{link\_abs}$ est déterminé en tant que rapport des différences temporelles respectives.

13. Procédé selon l'une quelconque des revendications précédentes, comprenant l'envoi (903 ; 905 ; 906), par un noeud de réseau distant, d'un premier message de synchronisation (203) pour la synchronisation au premier temps distant ($t_{1r}$), d'un deuxième message de synchronisation (403) pour la synchronisation au second temps distant ($t_{1abs}$) ou d'un troisième message de synchronisation (603) pour la synchronisation au premier temps ($t_{1rel}$) et au second temps ($t_{1abs}$) si une condition prédéterminée respective (902, 904, 906) basée sur le premier temps distant ($t_{1r}$) est satisfaite.

14. Procédé selon l'une quelconque des revendications précédentes, comprenant le fait que les informations sur les premier et second temps distants constituent un horodatage respectif d'envoi ou de réception d'un message correspondant.

15. Système de synchronisation d'horloges maîtres et esclaves dans un réseau informatique, **caractérisé par** un noeud de réseau distant (101) et un noeud de réseau local (102) configurés pour exécuter les étapes du procédé selon l'une quelconque des revendications précédentes.

16. Produit de programme informatique de synchronisation d'horloges maîtres et esclaves dans un réseau informatique, **caractérisé en ce que** le produit de programme informatique contient des instructions qui, lorsqu'elles sont exécutées sur un ordinateur, exécutent le procédé selon l'une quelconque des revendications 1 à 14.

# FIG. 1

## FIG. 2

## FIG. 3

## FIG. 4

## FIG. 5

# FIG. 6

102      101

601

$t_{22r}$

$t_{11abs}$ , $t_{11r}$

603

602

$t_{1abs}$ , $t_{1r}$

$t_{2r}$

605

604

$t_{3r}$

$t_{2abs}$ , $t_{4r}$

606

$t_{5r}$   $t_{abs}$ , $t_{rel}$

# FIG. 7

102      101

601

$t_{11abs}$ , $t_{11r}$

$t_{22r}$

603

$t_{1abs}$ , $t_{1r}$

$t_{2r}$

605

$t_{3r}$

$t_{2abs}$ , $t_{4r}$

606

$t_{5r}$   $t_{abs}$ , $t_{rel}$

# FIG. 8

# FIG. 9

**EP 3 288 200 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2863576 A